# EUROPÄISCHE PATENTSCHRIFT

(11) **EP 1 574 727 B1**
(45) Veröffentlichungstag und Bekanntmachung des Hinweises auf die Patenterteilung: **21.03.2007**
(21) Anmeldenummer: 05001189.9
(22) Anmeldetag: 21.01.2005
(51) Int. Cl.: F16B 25/00, F16B 33/02

(54) **Selbstfurchende Schraube**
Selfcutting screw
Vis tranchante

(30) Priorität: 10.03.2004 DE 102004011668
(43) Veröffentlichungstag der Anmeldung: 14.09.2005
(73) Patentinhaber: Hans Schriever GmbH & Co. KG, 58513 Lüdenscheid (DE)
(72) Erfinder: Dipl.-Ing. Geyer, Guido, 58339 Breckerfeld (DE); Dipl.-Ing. Glingener, Hartmut, 57439 Attendorn (DE)
(74) Vertreter: Körber, Martin Hans

(56) Entgegenhaltungen:
- EP-A- 0 589 399
- EP-A- 0 930 437
- EP-A- 1 388 676
- DE-A1- 3 114 138

## Beschreibung

Die Erfindung betrifft eine selbstfurchende Schraube gemäß den Merkmalen des Oberbegriffes des unabhängigen Anspruches 1.

Insbesondere betrifft die vorliegende Erfindung eine selbstfurchende Schraube mit einem ein Gewinde tragenden Bereich, wobei in dem das Gewinde tragenden Bereich zwischen Gewindegängen erste Kernabschnitte angeordnet sind und der Durchmesser jedes ersten Kernabschnittes ausgehend von einer ersten Fußlinie einer benachbarten ersten Gewindeflanke eines einem Schraubenkopf zugewandten ersten Gewindeganges in Richtung zu einer zweiten Fußlinie einer benachbarten zweiten Gewindeflanke eines dem Schraubenkopf abgewandten zweiten Gewindeganges konstant abnimmt.

Derartige Schrauben sind aufgrund des großen Verhältnisses zwischen Außendurchmesser und Kerndurchmesser sowie dem kleinen Flankenwinkel insbesondere für Thermoplaste geeignet.

Eine derartige Schraube ist aus dem Europäischen Patent EP 0 589 399 B1der Anmelderin bekannt und in Fig. 3 abgebildet. Die vorbekannte Schraube 1* weist einen Kopf 6*, einen Schaft 10* sowie einen ein Gewinde tragenden Bereich auf und dient dazu, in Thermoplasten Schraubverbindungen mit niedrigem Eindrehmoment und hoher Tragfähigkeit herzustellen. Dabei fallen während des Eindrehvorganges keine Späne an. Das thermoplastische Material wird durch die Schraube beim Eindrehen mit den bei Montagearbeiten im industriellen Maßstab üblichen hohen Drehzahlen vielmehr lediglich erwärmt und verdrängt. Gemäß diesem Dokument wurde der Vorgang des Vordrängens von Material, bei dem das Material jeweils an den Gewindeflanken 5*, 8* der Gewindegänge 2* verdichtet wird und so die Tragfähigkeit der Schraubverbindung erhöht, dadurch verbessert, dass das Verhältnis zwischen dem Gewinde-Außendurchmesser D* und dem größten Kerndurchmesser d1* etwa den Wort 1,6 hat, dass das Verhältnis zwischen dem Gewinde-Außendurchmesser D* und dem axialen Abstand der Gewindegänge A* etwa 2,3 beträgt und dass die Übergängezwischen den Gewindeflanken 5*, 8* und den jeweils benachbarten Kernabschnitten 3* abgerundet sind. Weiter wurde vorgeschlagen, dass der Flankenwinkel β* kleiner als 48° ist und insbesondere etwa 30° beträgt und die Mantellinien jedes Kernabschnittes 3* gegenüber einer Schraubenlängsachse 9* um einen Winkel γ im Bereich von etwa 4° bis etwa 14°, vorzugsweise etwa 8° geneigt ist.

Eine alternative Lösung gemäß dem Stand der Technik ist aus der DE 2 754 870 bekannt. Die dort beschriebene Schraube weist jedoch Kernabschnitte zwischen den Gewindegängen auf, die aus jeweils zwei identischen kegelstumpfförmigen Bereichen bestehen. Diese stoßen mit ihren Grundflächen kleineren Durchmessers jeweils in der Mitte zwischen den Gewindegängen aneinander. Die beim Einschraubvorgang verdrängte Materialanteile worden folglich an diese Stelle in der Mitte und nicht wie bei der eingangs erwähnten Schraube und beim Gegenstand der Erfindung gegen die Gewindegänge transportiert. Wegen dieses grundsätzlich anderen Materialflusses haben die in der DE-A-2 754 870 genannten Verhältniswerte völlig andere Auswirkungen, so dass die aus dieser Druckschrift bekannte Schraube insofern nicht mit dem Gegenstand der Erfindung verglichen worden kann.

Bei den vorbekannten Schrauben ist es als nachteilig erkannt worden, dass der Materialfluss des verdrängten Materials unzureichend ist, wodurch die Torsionsfestigkeit herabgesetzt wird. In der Folge müssen bekannte Schrauben entsprechend lange ausgebildet sein oder einen erhöhten Durchmesser aufweisen.

Ausgehend hiervon ist es Aufgabe der vorliegenden Erfindung, eine selbstfurchende Schraube zur Verfügung zu stellen, bei welcher der Materialfluss des verdrängten Materials verbessert ist.

Die Aufgabe wird bei einer selbstfurchenden Schraube mit den Merkmalen des Oberbegriffes des unabhängigen Anspruches 1 gemäß den Merkmalen des kennzeichnenden Teils des unabhängigen Anspruches 1 gelöst. Die Erfindung wird in den Unteransprüchen weitergebildet.

Bei der erfindungsgemäß ausgebildeten Schraube kann das beim Eindrehen verdrängte Material, ohne durch scharfe Winkel in seinem Fluss beeinträchtigt zu worden, gegen die an den Bereich des kleinsten Kerndurchmessers angrenzende Gewindeflanke strömen und dort verdichtet worden. Dadurch, dass sich die dem Schraubenkopf zugewandte zweite Gewindeflanke eines jeden Gewindeganges erfindungsgemäß aus einem ersten Bereich und einem zweiten Bereich zusammensetzt, wobei ein erster Flankenwinkel im ersten Bereich größer ist, als ein zweiter Flankenwinkel im zweiten Bereich wird das verdrängte Material in dem Bereich des kleinsten Kerndurchmessers besser verteilt.

Dies führt zu einer erhöhten Materialstärke in diesem Bereich. Hieraus resultieren ein im Vergleich mit dem Stand der Technik verringertes Einschraubmoment und eine festere Verankerung im Material, so dass die erfindungsgemäße Schraube ohne Materialzerstörung höher belastbar ist. Die Verwendung kürzerer oder dünnerer Schrauben als beim Stand der Technik wird so ermöglicht. Weiter reduziert der durch die erfindungsgemäße Flankengeometrie verursachte Materialfluss beim Eindrehen das Entstehen von Radialspannungen, wodurch das zu verschraubende Material dünnwandiger als bei herkömmlichen Schrauben ausgeführt werden kann.

Die mit der erfindungsgemäßen Schraube erzielbare höhere Gewindeüberdeckung bei kleinerer Einbautiefe führt zu einer erhöhten Wirtschaftlichkeit der erfindungsgemäßen Schraube. Weiter führt eine entsprechend optimierte Steigung der Gewindegänge zu einer großen Selbsthemmung im Gewinde, so dass ein unbeabsichtigtes Lösen der erfindungsgemäßen Schraube sicher vermieden werden kann.

Aufgrund der positiven Querschnittsveränderung der Gewindegänge weist die erfindungsgemäße Schraube ferner eine gegenüber Schrauben nach dem Stand der Technik erhöhte Torsionsfestigkeit und Zugfestigkeit und damit eine erhöhte Lebensdauer auf.

Vorteilhafterweise beträgt das Verhältnis zwischen dem ersten Flankenwinkel im ersten Bereich der dem Schraubenkopf zugewandte zweite Gewindeflanke zu dem zweiten Flankenwinkel im zweiten Bereich der dem Schraubenkopf zugewandte zweite Gewindeflanke zwischen 1,5 und 3,5, vorzugsweise zwischen 2 und 3, besonders bevorzugt zwischen 2,2 und 2,8 und insbesondere 2,5.

Besonders vorteilhaft ist es, wenn zwischen der dem Schraubenkopf zugewandten zweiten Gewindeflanken eines jeden Gewindeganges ein die jeweils benachbarte zweite Fußlinie bildender zweiter Kernabschnitt vorgesehen ist, dessen Durchmesser konstant ist. In diesem Bereich konstanten Durchmesser kann sich das beim Einschrauben verdrängte Material besonders leicht anordnen.

In diesem Fall ist es besonders vorteilhaft, wenn das Verhältnis der axialen Längen von dem ersten Kernabschnitt zu dem zweiten Kernabschnitt zwischen 2 und 6, vorzugsweise zwischen 3 und 5, und insbesondere etwa 4 beträgt.

In einer bevorzugten Ausführungsform beträgt das Verhältnis zwischen dem Außendurchmesser des Gewindes und dem größten Kerndurchmesser zwischen 1 und 2, vorzugsweise zwischen 1 und 1,6, besonders bevorzugt zwischen 1,1 und 1,4 und insbesondere etwa 1,26.

Vorteilhaft ist es, wenn das Verhältnis zwischen dem Außendurchmesser des Gewindes und dem axialen Abstand der Gewindegänge zwischen 1 und 2, vorzugsweise zwischen 1,2 und 1,6, besonders bevorzugt zwischen 1,3 und 1,5 und insbesondere etwa 1,46 beträgt.

Ein besonders gutes Einschraubverhalten lässt sich erzielen, wenn der zweite Flankenwinkel im zweiten Bereich der dem Schraubenkopf zugewandten zweite Gewindeflanke eines jeden Gewindeganges gleich einem dritten Flankenwinkel der dem Schraubenkopf abgewandten ersten Gewindeflanke des jeweiligen Gewindeganges ist.

Um den Materialfluss nicht zu behindern, sind die Übergänge zwischen den Gewindeflanken und den jeweils benachbarten Kernabschnitten im Bereich der Fußlinien vorzugsweise abgerundet.

Ein besonders guter Kompromiss zwischen der Schaffung von Freiraum für verdrängtes Material und der Erhaltung der Torsions- und Zugfestigkeit der Schraube lässt sich erzielen, wenn ein Neigungswinkel zwischen Mantellinien jedes ersten Kernabschnitts und einer Schraubenlängsachse im Bereich von etwa 4° bis etwa 14°, vorzugsweise bei etwa 8°, liegt.

Vorteilhafterweise ist das Gewinde als Spitzgewinde ausgebildet.

Zur Erzielung hoher axialer und geringer radialer Kraftkomponenten sowie einer geringen Reibung an den Gewindeflanken schließen der zweite Flankenwinkel im zweiten Bereich der dem Schraubenkopf zugewandten zweite Gewindeflanke eines jeden Gewindeganges und der dritte Flankenwinkel der dem Schraubenkopf abgewandten ersten Gewindeflanke des jeweiligen Gewindeganges zusammen einen Summen-Flankenwinkel von kleiner als 48°, vorzugsweise kleiner als 35° und besonders bevorzugt von etwa 30° ein.

Die Winkelhalbierende des Summen-Flankenwinkels verläuft hier bevorzugt senkrecht zur Schraubenlängsachse.

Alternativ kann die Winkelhalbierende des Summen-Flankenwinkels gegenüber der Schraubenlängsachse um zwischen 0,5°und 15°, vorzugsweise zwischen 0,5 und 8° geneigt sein.

Nachstehend ist die Erfindung anhand eines bevorzugten Ausführungsbeispiels unter Bezugnahme auf die beigefügten Figuren näher erläutert, wobei gleiche Bezugszeichen in unterschiedlichen Figuren gleiche Elemente bezeichnen.

Dabei zeigt
- Figur 1: eine Aufsicht auf eine erfindungsgemäße Schraube;
- Figur 2: einen axialen Längsschnitt durch zwei Gewindegänge der Schraube aus Figur 1; sowie

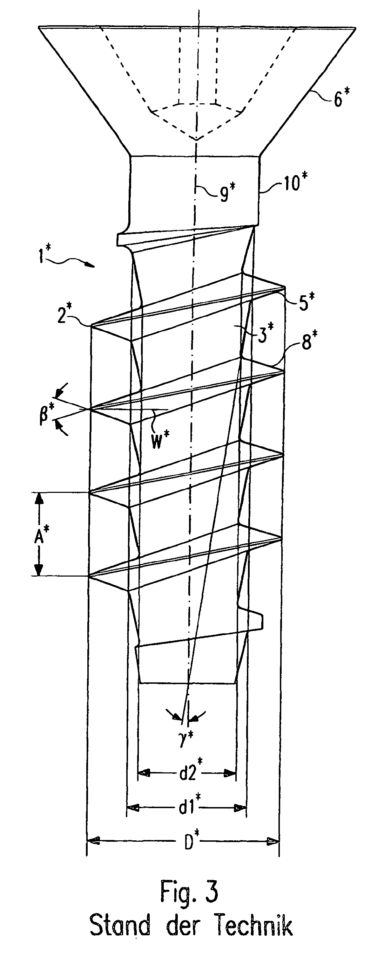

- Figur 3: eine Schraube nach dem Stand der Technik.

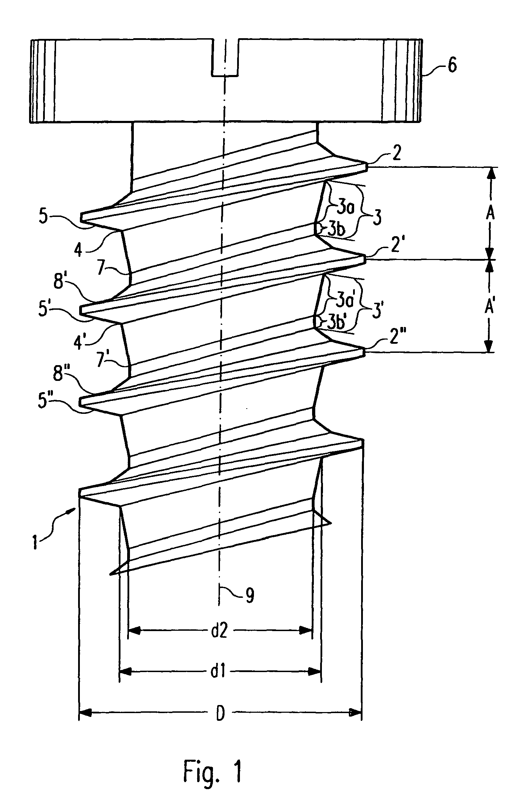

Die in der Figur 1 dargestellte selbstfurchende Schraube 1 ist für Thermoplaste und Materialien mit ähnlichen Eigenschaften vorgesehen und umfasst einen Schraubenkopf 6 mit einem Werkzeugangriff. In der Figur weist die Schraube 1 einen zylindrischen Schraubenkopf 6 und einen Schlitz für einen Schraubenzieher auf. Alternativ kann der Schraubenkopf 6 beispielsweise auch als Senkkopf ausgeführt sein.

Die Schraube weist einen im wesentlichen zylindrischen Schraubenschaft oder Kern mit einem ein Gewinde tragenden Bereich mit eingängigem Spitzgewinde auf. Zwischen den einzelnen Gewindegängen 2, 2', 2" ist je ein Kernbereich 3, 3' angeordnet.

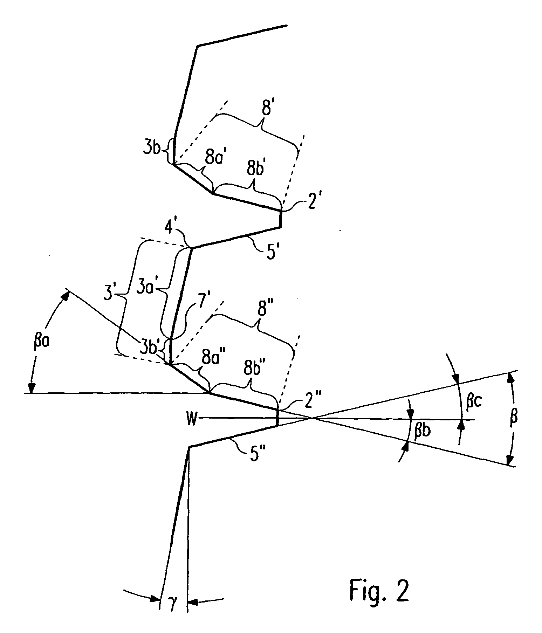

In der in den Figuren 1 und 2 gezeigten besonders bevorzugten Ausführungsform besteht jeder Kernbereich 3, 3' aus einem ersten und zweiten Kernabschnitt 3a, 3a', 3b, 3b'. Der Durchmesser jedes ersten Kernabschnittes 3a, 3a' nimmt ausgehend von einer ersten Fußlinie 4, 4' einer benachbarten ersten Gewindeflanke 5, 5' eines dem Schraubenkopf 6 zugewandten ersten Gewindeganges 2, 2' in Richtung zu einer zweiten Fußlinie 7, 7' einer benachbarten zweiten Gewindeflanke 8', 8" eines dem Schraubenkopf 6 abgewandten zweiten Gewindeganges 2', 2" konstant ab.

Jeder erste Kernabschnitt 3a, 3a' ist somit konisch ausgebildet und verjüngt sich ausgehend von der ersten Fußlinie 4, 4' der benachbarten ersten Gewindeflanke 5, 5' bis zur zweiten Fußlinie 7, 7' der benachbarten zweiten Gewindeflanke 8, 8', d.h. in Richtung einer (nicht dargestellten) Spitze der Schraube 1. Dabei schließt die Mantellinie jedes ersten Kernabschnitts 3a, 3a' mit einer Schraubenlängsachse 9 einen Neigungswinkel γ ein, der in Figur 1 etwa 8° beträgt. Allgemein sollte der Neigungswinkel γ im Bereich von etwa 4° bis etwa 14° liegen.

Jeder erste Kernabschnitt 3a, 3a' weist somit einen der ersten Fußlinie 4, 4' zugeordneten größten Kerndurchmesser d1 sowie einen der zweiten Fußlinie 7, 7' zugeordneten kleinsten Kerndurchmesser d2 auf. Dementsprechend ist die Tragtiefe der jeweiligen zweiten Gewindeflanke 8', 8", d.h. die Differenz zwischen dem Außendurchmesser D des Gewindes und dem kleinsten Kerndurchmesser d2 größer als die bis zum größten Kerndurchmesser d1 gemessene Tragtiefe der jeweiligen ersten Gewindeflanke 5, 5', 5".

Bei der in Figur 1 gezeigten Schraube 1 steht der Außendurchmesser D des Gewindes zum größten Kerndurchmesser d1 in einem Verhältnis von etwa 1,26, während sich das Verhältnis zwischen dem Außendurchmesser D des Gewindes und dem axialen Abstand A, A' der Gewindegänge 2, 2', 2" etwa 1,46 beträgt. Allgemein sollte das Verhältnis zwischen dem Außendurchmesser D des Gewindes und dem größten Kerndurchmesser d1 zwischen 1 und 2, vorzugsweise zwischen 1 und 1,6 und besonders bevorzugt zwischen 1,1 und 1,4 und das Verhältnis zwischen dem Außendurchmesser D des Gewindes und dem axialen Abstand A, A' der Gewindegänge 2, 2', 2" zwischen 1 und 2, vorzugsweise zwischen 1,2 und 1,6 und besonders bevorzugt zwischen 1,3 und 1,5 betragen.

Der dem ersten Kernabschnitt 3a, 3a' benachbarte zweite Kernabschnitt 3b, 3b' ist an der dem Schraubenkopf zugewandten zweiten Gewindeflanken 8', 8" eines jeden Gewindeganges 2', 2" angeordnet und weist einen konstanten Durchmesser auf. Der zweite Kernabschnitt 3b, 3b' bildet so eine zweite Fußlinie 7, 7' für den ersten Kernabschnitt 3a, 3a'.

In der Figur beträgt das Verhältnis der axialen Längen von dem ersten Kernabschnitt 3a, 3a' zu dem zweiten Kernabschnitt 3b, 3b' etwa 4. Allgemein sollte das Verhältnis zwischen 2 und 6 und vorzugsweise zwischen 3 und 5 betragen.

Die Übergänge zwischen den Gewindeflanken 5, 5', 8, 8' und den jeweils benachbarten Kernabschnitten 3a, 3b, 3a', 3b' sind im Bereich der Fußlinien 4, 7, 4', 7' abgerundet, um eine Materialverdrängung nicht zu behindern.

Erfindungsgemäß setzt sich jede dem Schraubenkopf 6 zugewandte zweite Gewindeflanke 8' eines jeden Gewindeganges 2, 2', 2" aus einem ersten Bereich 8a' und einem zweiten Bereich 8b' zusammen, wobei ein erster Flankenwinkel βa im ersten Bereich 8a' größer, als ein zweiter Flankenwinkel βb im zweiten Bereich 8b' ist.

In den Figuren 1 und 2 beträgt das Verhältnis zwischen dem ersten Flankenwinkel β a im ersten. Bereich 8a' der dem Schraubenkopf 6 zugewandten zweiten Gewindeflanke 8' zu dem zweiten Flankenwinkel βb im zweiten Bereich 8b' der dem Schraubenkopf zugewandten zweiten Gewindeflanke 8' etwa 2,5. Allgemein sollte dieses Verhältnis zwischen 1,5 und 3,5, vorzugsweise zwischen 2 und 3 und besonders bevorzugt zwischen 2,2 und 2,8 betragen.

In dem gezeigten besonders bevorzugten Ausführungsbeispiel ist der zweite Flankenwinkel βb im zweiten Bereich 8b' der dem Schraubenkopf zugewandten zweite Gewindeflanke 8' eines jeden Gewindeganges 2, 2', 2" gleich einem dritten Flankenwinkel βc der dem Schraubenkopf abgewandten ersten Gewindeflanke 5' des jeweiligen Gewindeganges 2, 2', 2". Dabei bilden in den Figuren 1 und 2 der zweite Flankenwinkel βb im zweiten Bereich 8b' der dem Schraubenkopf 6 zugewandten zweite Gewindeflanke 8' eines jeden Gewindeganges 2' und der dritte Flankenwinkel βc der dem Schraubenkopf 6 abgewandten ersten Gewindeflanke 5' des jeweiligen Gewindeganges 2' zusammen einen Summen-Flankenwinkel β von etwa 30°. Allgemein sollte der Summen-Flankenwinkel β kleiner als 48° und vorzugsweise kleiner als 35° sein.

In Figur 1 verläuft die Winkelhalbierende W des Summen-Flankenwinkels β senkrecht zur Schraubenlängsachse 9.

Gemäß einer in den Figuren nicht dargestellten alternativen Ausführungsform kann die Winkelhalbierende W des Summen-Flankenwinkels β jedoch auch gegenüber der Schraubenlängsachse 9 um zwischen 0,5°und 15° und vorzugsweise zwischen 0,5 und 8° geneigt sein.

Im Bereich einer in Figur 1 nicht gezeigten Schraubenspitze kann ein sogenannter Anschneidbereich ausgebildet sein, in welchem die Gewindegänge 2, 2', 2" allmählich bis zum Überstand Null über den Schaft der Schraube auslaufen. Der Anschneidbereich endet vorzugsweise stumpf mit einem Durchmesser, der etwas kleiner als d2 ist. In diesem Fall ist die Schraube für das Eindrehen in eine Bohrung vorgesehen. Wenn hingegen die Schraube ohne Bohrung in ein Material eingedreht worden soll, ist der Anschneidbereich vorzugsweise mit einer Bohrspitze ausgebildet.

Beim Eindrehen der Schraube in thermoplastisches Material mit den bei Montagearbeiten im industriellen Maßstab üblichen hohen Drehzahlen werden Materialanteile bis zur Fließfähigkeit erwärmt und in die Kernbereiche 3, 3' zwischen den Gewindegängen 2, 2', 2" bis gegen die Mantelfläche des jeweiligen ersten bzw. zweiten Kernabschnitts 3a, 3a', 3b, 3b' verdrängt. Dabei führt der erfindungsgemäß vorgesehene erste Bereich 8a', 8a" der dem Schraubenkopf 6 zugewandten Gewindeflanke 8, 8' zu einer größeren Materialanhäufung in diesem Bereich. Hieraus resultieren ein im Vergleich mit dem Stand der Technik verringertes Einschraubmoment und eine festere Verankerung im Material, so dass die erfindungsgemäße Schraube 1 ohne Materialzerstörung höher belastbar ist. Die Verwendung kürzerer oder dünnerer Schrauben 1 als beim Stand der Technik wird so ermöglicht.

Sobald der Schraubenkopf 6 am Material anliegt, wird die Schraube bei weiterer Drehung entsprechend vorgespannt. Aufgrund der großen Tragtiefe der zweiten Gewindeflanken 8', 8" und des in deren Bereichen verdichteten Materials können von den Gewindeflanken 8', 8" hohe Vorspannkräfte aufgebracht und vom Material ohne Gefahr der Zerstörung aufgenommen worden.

Weiter reduziert der durch die erfindungsgemäße Flankengeometrie verursachte Materialfluss beim Eindrehen der Schraube 1 das Entstehen von Radialspannungen, wodurch das zu verschraubende Material dünnwandiger als bei herkömmlichen Schrauben ausgeführt werden kann.

Die mit der erfindungsgemäßen Schraube erzielbare höhere Gewindeüberdeckung bei kleinerer Einbautiefe führt zu einer erhöhten Wirtschaftlichkeit der erfindungsgemäßen Schraube. Weiter führt eine entsprechend optimierte Steigung der Gewindegänge zu einer großen Selbsthemmung im Gewinde, so dass ein unbeabsichtigtes Lösen der erfindungsgemäßen Schraube sicher vermieden werden kann. Aufgrund der positiven Querschnittsveränderung der Gewindegänge weist die erfindungsgemäße Schraube ferner eine gegenüber Schrauben nach dem Stand der Technik erhöhte Torsionsfestigkeit und Zugfestigkeit und damit eine erhöhte Lebensdauer auf.

## Patentansprüche

1. Selbstfurchende Schraube (1) für Thermoplaste, aufweisend
einen ein Gewinde tragenden Bereich, wobei in dem das Gewinde tragenden Bereich zwischen Gewindegängen (2, 2', 2") erste Kernabschnitte (3a, 3a') angeordnet sind und der Durchmesser jedes ersten Kernabschnittes (3a, 3a') ausgehend von einer ersten Fußlinie (4, 4') einer benachbarten ersten Gewindeflanke (5, 5') eines einem Schraubenkopf (6) zugewandten ersten Gewindeganges (2, 2') in Richtung zu einer zweiten Fußlinie (7, 7') einer benachbarten zweiten Gewindeflanke (8', 8") eines dem Schraubenkopf (6) abgewandten zweiten Gewindeganges (2', 2") konstant abnimmt, und wobei die erste Gewindeflanke (5, 5') - im Querschnitt der Gewindegänge gesehen - gerade verläuft,
**dadurch gekennzeichnet, dass**
sich die dem Schraubenkopf (6) zugewandte zweite Gewindeflanke (8') eines jeden Gewindeganges (2, 2', 2") aus einem ersten Bereich (8a') mit einem im Querschnitt geraden Verlauf und einem zweiten Bereich (8b') mit einem im Querschnitt geraden Verlauf zusammensetzt, wobei ein erster Flankenwinkel (βa) im ersten Bereich (8a') größer ist, als ein zweiter Flankenwinkel (βb) im zweiten Bereich (8b'), und wobei das Verhältnis zwischen dem ersten Flankenwinkel (βa) im ersten Bereich (8a') der dem Schraubenkopf (6) zugewandten zweiten Gewindeflanke (8') zu dem zweiten Flankenwinkel (βb) im zweiten Bereich (8b') der dem Schraubenkopf zugewandten zweiten Gewindeflanke (8') zwischen 1,5 und 3,5 beträgt.

2. Selbstfurchende Schraube nach Anspruch 1,
**dadurch gekennzeichnet, dass**
das Verhältnis zwischen dem ersten Flankenwinkel (βa) im ersten Bereich (8a') der dem Schraubenkopf (6) zugewandten zweiten Gewindeflanke (8') zu dem zweiten Flankenwinkel (βb) im zweiten Bereich (8b') der dem Schraubenkopf zugewandten zweiten Gewindeflanke (8') zwischen 2 und 3, bevorzugt zwischen 2,2 und 2,8 und insbesondere 2,5 beträgt.

3. Selbstfurchende Schraube nach Anspruch 1 oder 2,
**dadurch gekennzeichnet, dass**
zwischen der dem Schraubenkopf zugewandten zweiten Gewindeflanken (8', 8") eines jeden Gewindeganges (2', 2") ein die jeweils benachbarte zweite Fußlinie (7, 7') bildender zweiter Kernabschnitt (3b, 3b') vorgesehen ist, dessen Durchmesser konstant ist.

4. Selbstfurchende Schraube nach Anspruch 3,
**dadurch gekennzeichnet, dass**
das Verhältnis der axialen Längen von dem ersten Kernabschnitt (3a, 3a') zu dem zweiten Kernabschnitt (3b, 3b') zwischen 2 und 6, vorzugsweise zwischen 3 und 5, und insbesondere etwa 4 beträgt.

5. Selbstfurchende Schraube nach einem der vorhergehenden Ansprüche,
**dadurch gekennzeichnet, dass**
das Verhältnis zwischen dem Außendurchmesser (D) des Gewindes und dem größten Kerndurchmesser (d1) zwischen 1 und 2, vorzugsweise zwischen 1 und 1,6, besonders bevorzugt zwischen 1,1 und 1,4 und insbesondere etwa 1,26 beträgt.

6. Selbstfurchende Schraube nach einem der vorhergehenden Ansprüche,
**dadurch gekennzeichnet, dass**
das Verhältnis zwischen dem Außendurchmesser (D) des Gewindes und dem axialen Abstand (A, A') der Gewindegänge (2, 2', 2") zwischen 1 und 2, vorzugsweise zwischen 1,2 und 1,6, besonders bevorzugt zwischen 1,3 und 1,5 und insbesondere etwa 1,46 beträgt.

7. Selbstfurchende Schraube nach einem der vorhergehenden Ansprüche,
**dadurch gekennzeichnet, dass**
der zweite Flankenwinkel (βb) im zweiten Bereich (8b') der dem Schraubenkopf zugewandten zweite Gewindeflanke (8') eines jeden Gewindeganges (2, 2', 2") gleich einem dritten Flankenwinkel (βc) der dem Schraubenkopf abgewandten ersten Gewindeflanke (5') des jeweiligen Gewindeganges (2, 2', 2") ist.

8. Selbstfurchende Schraube nach einem der vorhergehenden Ansprüche,
**dadurch gekennzeichnet, dass**
die Übergänge zwischen den Gewindeflanken (5, 5', 8, 8') und den jeweils benachbarten Kernabschnitten (3a, 3b, 3a', 3b') im Bereich der Fußlinien (4, 7, 4', 7') abgerundet sind.

9. Selbstfurchende Schraube nach einem der vorhergehenden Ansprüche,
**dadurch gekennzeichnet, dass**
ein Neigungswinkel (γ) zwischen Mantellinien jedes ersten Kernabschnitts (3a, 3a') und einer Schraubenlängsachse (9) im Bereich von etwa 4° bis etwa 14°, vorzugsweise bei etwa 8°, liegt.

10. Selbstfurchende Schraube nach einem der vorhergehenden Ansprüche,
**dadurch gekennzeichnet, dass**
das Gewinde als Spitzgewinde ausgebildet ist.

11. Selbstfurchende Schraube nach einem der vorhergehenden Ansprüche,
**dadurch gekennzeichnet, dass**
der zweite Flankenwinkel (βb) im zweiten Bereich (8b') der dem Schraubenkopf (6) zugewandten zweite Gewindeflanke (8') eines jeden Gewindeganges (2') und der dritte Flankenwinkel (βc) der dem Schraubenkopf (6) abgewandten ersten Gewindeflanke (5') des jeweiligen Gewindeganges (2') zusammen einen Summen-Flankenwinkel (β) von kleiner als 48°, vorzugsweise kleiner als 35° und besonders bevorzugt von etwa 30° einschließen.

12. Selbstfurchende Schraube nach Anspruch 11,
**dadurch gekennzeichnet, dass**
die Winkelhalbierende (W) des Summen-Flankenwinkels (β) senkrecht zur Schraubenlängsachse (9) verläuft.

13. Selbstfurchende Schraube nach Anspruch 11,
**dadurch gekennzeichnet, dass**
die Winkelhalbierende (W) des Summen-Flankenwinkels (β) gegenüber der Schraubenlängsachse (9) um zwischen 0,5°und 15° und vorzugsweise zwischen 0,5° und 8 ° geneigt ist.

## Claims

1. Selfcutting screw (1) for thermoplastics, comprising
a region bearing a thread, wherein first core portions (3a, 3a') are disposed between thread turns (2, 2', 2") in the region bearing the thread, and the diameter of each first core portion (3a, 3a') constantly decreases from a first root line (4, 4') of an adjacent first thread flank (5, 5') of a first thread turn (2, 2') facing a screw head (6) in the direction of a second root line (7, 7') of an adjacent second thread flank (8', 8") of a second thread turn (2', 2") remote from the screw head (6), and wherein the first thread flank (5, 5') - viewed in cross section of the thread turns - extends in a straight line,
**characterised in that**
the second thread flank (8'), facing the screw head (6), of each thread turn (2, 2', 2") is composed of a first region (8a') extending in a straight line in cross section and a second region (8b') extending in a straight line in cross section, wherein a first flank angle (βa) in the first region (8a') is greater than a second flank angle (βb) in the second region (8b'), and wherein the ratio of the first flank angle (βa) in the first region (8a') of the second thread flank (8') facing the screw head (6) to the second flank angle (βb) in the second region (8b') of the second thread flank (8') facing the screw head is between 1.5 and 3.5.

2. Selfcutting screw according to Claim 1,
**characterised in that**
the ratio of the first flank angle (βa) in the first region (8a') of the second thread flank (8') facing the screw head (6) to the second flank angle (βb) in the second region (8b') of the second thread flank (8') facing the screw head is between 2 and 3, preferably between 2.2 and 2.8 and in particular 2.5.

3. Selfcutting screw according to Claim 1 or 2,
**characterised in that**
a second core portion (3b, 3b'), which forms the respective adjacent second root line (7, 7'), is provided between the second thread flanks (8', 8"), facing the screw head, of each thread turn (2', 2"), the diameter of which portion is constant.

4. Selfcutting screw according to Claim 3,
**characterised in that**
the ratio of the axial lengths of the first core portion (3a, 3a') to the second core portion (3b, 3b') is between 2 and 6, preferably between 3 and 5 and in particular approximately 4.

5. Selfcutting screw according to any one of the preceding Claims,
**characterised in that**
the ratio of the outside diameter (D) of the thread to the maximum core diameter (d1) is between 1 and 2, preferably between 1 and 1.6, particularly preferably between 1.1 and 1.4 and in particular approximately 1.26.

6. Selfcutting screw according to any one of the preceding Claims,
**characterised in that**
the ratio of the outside diameter (D) of the thread to the axial spacing (A, A') of the thread turns (2, 2', 2") is between 1 and 2, preferably between 1.2 and 1.6, particularly preferably between 1.3 and 1.5 and in particular approximately 1.46.

7. Selfcutting screw according to any one of the preceding Claims,
**characterised in that**
the second flank angle (βb) in the second region (8b') of the second thread flank (8'), facing the screw head, of each thread turn (2, 2', 2") is the same as a third flank angle (βc) of the first thread flank (5'), remote from the screw head, of the respective thread turn (2, 2', 2").

8. Selfcutting screw according to any one of the preceding Claims,
**characterised in that**
the transitions between the thread flanks (5, 5', 8, 8') and the respective adjacent core portions (3a, 3b, 3a', 3b') are rounded in the region of the root lines (4, 7, 4', 7').

9. Selfcutting screw according to any one of the preceding Claims,
**characterised in that**
an angle of inclination (γ) between surface lines of each first core portion (3a, 3a') and a longitudinal axis (9) of the screw lies in the range from approximately 4° to approximately 14°, preferably at approximately 8°.

10. Selfcutting screw according to any one of the preceding Claims,
**characterised in that**
the thread is formed as a V thread.

11. Selfcutting screw according to any one of the preceding Claims,
**characterised in that**
the second flank angle (βb) in the second region (8b') of the second thread flank (8'), facing the screw head (6), of each thread turn (2') and the third flank angle (βc) of the first thread flank (5'), remote from the screw head (6), of the respective thread turn (2') together form a total flank angle (β) of less than 48°, preferably less than 35° and particularly preferably of approximately 30°.

12. Selfcutting screw according to Claim 11,
**characterised in that**
the angle bisector (W) of the total flank angle (β) extends perpendicularly to the longitudinal axis (9) of the screw.

13. Selfcutting screw according to Claim 11,
**characterised in that**
the angle bisector (W) of the total flank angle (β) is inclined by between 0.5° and 15° and preferably between 0.5° and 8° with respect to the longitudinal axis (9) of the screw.

## Revendications

1. Vis autotaraudeuse (1) pour des matières thermoplastiques, présentant
une zone munie d'un filetage, où dans la zone munie du filetage sont disposées entre des pas (2,2',2") des premières sections centrales (3a,3a'), et où le diamètre de chaque première section centrale (3a,3a'), en partant d'une première ligne de base (4,4') d'un premier flanc de filetage avoisinant (5,5') d'un premier pas (2,2') orienté vers la tête de vis (6) diminue d'une manière constante en direction d'une deuxième ligne de base (7,7') d'un deuxième flanc de filetage avoisinant (8', 8") d'un deuxième pas (2',2") éloigné de la tête de vis (6), et où le premier flanc de filetage (5,5'), vu en section transversale des pas, s'étend d'une manière rectiligne,
**caractérisée en ce que** le deuxième flanc de filetage (8') orienté vers la tête de vis (6) de chaque pas (2,2',2") est constitué d'une première zone (8a') s'étendant d'une manière rectiligne en section transversale et d'une deuxième zone (8b') s'étendant d'une manière rectiligne en section transversale, où un premier angle de flanc (βa) dans la première zone (8a') est plus grand qu'un deuxième angle de flanc (βb) dans la deuxième zone (8b'), et où le rapport entre le premier angle de flanc (βa) dans la première zone (8a') du deuxième flanc de filetage (8') orienté vers la tête de vis (6) relativement au deuxième angle de flanc (βb) dans la deuxième zone (8b') du deuxième flanc de filetage (8') orienté vers la tête de vis est compris entre 1,5 et 3,5.

2. Vis autotaraudeuse selon la revendication 1, **caractérisée en ce que** le rapport entre le premier angle de flan (βa) dans la première zone (8a') du deuxième flanc de filetage (8') orienté vers la tête de vis (6) au deuxième angle de flanc (βb) dans la deuxième zone (8b') du deuxième flanc de filetage (8') orienté vers la tête de vis est compris entre 2 et 3, de préférence entre 2,2 et 2,8 et qu'il est en particulier de 2,5.

3. Vis autotaraudeuse selon la revendication 1 ou 2, **caractérisée en ce qu'**il est prévu entre le deuxième flanc de filetage (8',8"), orienté vers la tête de vis, de chaque pas (2',2") d'une deuxième section centrale (3b,3b') constituant la deuxième ligne de base (7,7') respectivement avoisinante, dont le diamètre est constant.

4. Vis autotaraudeuse selon la revendication 3, **caractérisée en ce que** le rapport des longueurs axiales de la première section centrale (3a,3a') à la deuxième section centrale (3b,3b') est compris entre 2 et 6, de préférence entre 3 et 5, et qu'il est en particulier d'environ 4.

5. Vis autotaraudeuse selon l'une des revendications précédentes, **caractérisée en ce que** le rapport entre le diamètre extérieur (D) du filetage et le diamètre central le plus grand (d1) est compris entre 1 et 2, de préférence entre 1 et 1,6, selon une préférence particulière entre 1,1 et 1,4 et qu'il est notamment d'environ 1,26.

6. Vis autotaraudeuse selon l'une des revendications précédentes, **caractérisée en ce que** le rapport entre le diamètre extérieur (D) du filetage et l'écart axial (A,A') des pas (2,2',2") est compris entre 1 et 2, de préférence entre 1,2 et 1,6, selon une préférence particulière entre 1,3 et 1,5 et qu'il est notamment d'environ 1,46.

7. Vis autotaraudeuse selon l'une des revendications précédentes, **caractérisée en ce que** le deuxième angle de flanc (βb) dans la deuxième zone (8b') du deuxième flanc de filetage (8') orienté vers la tête de vis de chaque pas (2,2',2") est égal à un troisième angle de flanc (βc) du premier flanc de filetage (5'), éloigné de la tête de vis, du pas respectif (2,2',2").

8. Vis autotaraudeuse selon l'une des revendications précédentes, **caractérisée en ce que** les passages entre les flancs de filetage (5, 5', 8, 8') et les sections centrales (3a,3b,3a',3b') respectivement avoisinantes sont arrondis dans la zone des lignes de base (4,7,4',7').

9. Vis autotaraudeuse selon l'une des revendications précédentes, **caractérisée en ce qu'**un angle d'inclinaison (γ) entre des génératrices de chaque première section centrale (3a, 3a') et un axe de longueur de vis (9) se situe dans la zone d'environ 4° à environ 14°, et qu'il est de préférence d'environ 8°.

10. Vis autotaraudeuse selon l'une des revendications précédentes, **caractérisée en ce que** le filetage est réalisé comme filet triangulaire.

11. Vis autotaraudeuse selon l'une des revendications précédentes, **caractérisée en ce que** le deuxième angle de flan (βb) dans la deuxième zone (8b') du deuxième flanc de filetage (8') orienté vers la tête de vis (6) de chaque pas (2') et le troisième angle de flanc (βc) du premier flanc de filetage (5') éloigné de la tête de vis (6) du pas respectif (2') forment ensemble un angle de flanc total (β) inférieur à 48°, de préférence inférieur à 35° et selon une préférence particulière d'environ 30°.

12. Vis autotaraudeuse selon la revendication 11, **caractérisée en ce que** la bissectrice (W) de l'angle de flanc total (β) s'étend perpendiculairement à l'axe longitudinal (9) de la vis.

13. Vis autotaradeuse selon la revendication 11, **caractérisée en ce que** la bissectrice (W) de l'angle de flanc total (β) est inclinée par rapport à l'axe longitudinal (9) de la vis selon entre 0,5° et 15° et de préférence entre 0,5° et 8°.
